# EUROPEAN PATENT SPECIFICATION

(11) **EP 2 499 285 B1**
(45) Date of publication and mention of the grant of the patent: **22.06.2016**
(21) Application number: 10784682.6
(22) Date of filing: 12.11.2010
(51) Int. Cl.: D04H 1/42, D04H 1/54, E04B 1/74

(54) **A NON-WOVEN FIBRE PRODUCT COMPRISING FIBRES OF RECYCLED MATERIAL**
VLIESFASERPRODUKT MIT FASERN AUS RECYCLING-MATERIAL
PRODUIT EN FIBRES NON TISSÉES COMPORTANT DES FIBRES DE MATÉRIAU RECYCLÉ

(30) Priority: 13.11.2009 DK 200970203
(43) Date of publication of application: 19.09.2012
(73) Proprietor: Formfiber Denmark ApS, 8464 Skovby, Galten (DK)
(72) Inventor: ANDERSEN, Carsten, 8310 Tranbjerg (DK)
(74) Representative: Høiberg A/S
(86) International application number: PCT/DK2010/050305
(87) International publication number: WO 2011/057641

(56) References cited:
- EP-A2- 0 763 418
- US-A- 5 642 601

## Description

The present invention relates to a non-woven fibre product comprising recycled material and manufactured by a dry forming process, a method of manufacturing such product and the use of such recycled materials.

From US-A-5,516,580 an insulation batt is known, where the material contains a portion of cellulose fibres, and longer bonding synthetic fibres. These synthetic fibres are so-called bi-component fibres that have an outer sheath which is heat-fused with outer sheaths of other synthetic fibres at crossing contact points thereof to form a matrix having pockets for retaining loose fill cellulose fibres therein. This matrix eliminates the need of an adhesive binder to retain the cellulose fibres in the matrix.

The drawback of this insulation board is that the fibre batt obtained hereby is not particularly resilient and the use of longer bi-component synthetic bonding fibres makes the product very expensive to manufacture.

A method of making a resilient mat is known from US-A-5,554,238. The insulation mat according to this method comprises cellulosic and thermoplastic fibres. A mat is formed in an air-laying process and subsequently the surface is flame-treated to melt the thermoplastic component on the surface forming a skin which keeps the cellulosic fibres intact. The thermoplastic fibres in the interior of the mat remains unmelted, whereby the mat is provided with a spring-back characteristic, which allows the mat to retain most of its original shape after it has been compressed, e.g. for shipping.

However, this resilient mat has a "crisp" exterior surface reducing the resiliency of the mat as a whole and not homogeneously bonded throughout the product, which does not allow for easy handling since the product may easily delaminate or otherwise break up. The insulation effect is moreover reduced due to the more compact structure of the fibre product.

From WO 01/48330 a recyclable insulating mat comprising shredded waste paper or cardboard mixed with natural fibres and 5-50 % polyester is known.

In DE 196 02 551 C1, there is described a mat for manufacturing self-supporting form parts by heat treatment. The mat comprises long natural fibres and thermoplastic binding means provided as synthetic fibres. The thermoplastic binding means are provided synthetic material with a high melting point and a low melting point.

Further relevant prior art can be found in EP 0 763 418 A and US 5 642 601 A. Z

It is an object of the present invention to provide a resilient fibrous product which is recyclable and inexpensive to manufacture from waste material.

This object is achieved by a non-woven fibre product comprising recycled material and manufactured by a dry forming process, said product comprising a first portion of up to 99 % dust material, where the dust material is recovered dust from manufacturing of fibrous textile material, preferably cotton textiles, and a second portion at least 1 % bi-component fibres having a length between 2-75 mm, preferably 2-25 mm in length. and wherein at least 50% of the portion of bi-component fibres are crimped fibres with a length between 2 to 50 mm.

Dust material from processing textile materials, from e.g. manufacturing, cutting, tumble drying and recycling of textiles, a waste product is dust which is frequently removed from filter screens and the like in the processing equipment. This dust is at present disposed of and shipped off to landfill or burned off. A textile processing business thus is faced with costs for removing and disposing of this dust material. However, according to the invention, the use of dust material is advantageous because there is now provided a product in which this waste material can be recycled and used for a useful purpose. The non-woven product obtained by the invention has excellent spring-back properties and is very inexpensive in manufacturing since the key ingredient, i.e. the dust material, is inexpensive in purchase. The dust material from textile processing are characteristic in that the textile fibres are very short and crimped since the fibres derive from yarns that are spun and subsequently woven and thereby provided with a spring-like, crimpy shape. By the invention it is thus realised that an airy, non-woven product is obtainable which has a very low density and with good insulation properties. The fibre mat products may accordingly be used for heat or sound insulation purposes, such as insulation in the housing sector, the automotive sector or for maritime purposes as well as within product types such as air condition equipment, machinery, wind turbines etc.. Accordingly, it is realised that the products may be provided in predetermined shapes to fit within or around panels or the like.

It is realised that by a dry-laid, air-laid or otherwise fibre formed product according to the invention a cost-effective fibrous, soft product of recycled materials can be provided in a predetermined shape which can be used in the packaging industry as a substitute for foam products or the like which are otherwise used for protecting goods, such as electronic products, etc. inside the package.

According to a second aspect of the invention, there is provided a method of manufacturing a non-woven product by dry forming a product of fibrous material, said method comprising the steps of:
- providing a fibre mixture for providing a fibrous material, where said fibrous material comprises a first portion of up to 99 % dust material, where the dust material is preferably recovered dust from manufacturing of fibrous textile material, preferably cotton textiles, and a second portion at least 1 % bi-component fibres having a length between 2-75 mm, preferably 2-25 mm in length and wherein at least 50% of the portion of bi-component fibres are crimped fires with a length between 2 to 50 mm, and comprising a core and an outer sheathing, said outer sheathing having a first melting temperature which is lower than the second melting temperature of the core;
- advancing said fibrous material into a forming medium,
- heating the web of fibres formed on the forming wire to a temperature above the first melting temperature; and then
- advancing the fibrous web through a pressing section whereby a fibrous product web with a predetermined density is formed.

By the invention, it is realised that the textile dust material can be recycled in an advantageous manner by utilising this material in an air-laid fibre mat which is obtainable by using the manufacturing technology disclosed in WO2005/044529. However it is realised that other dry-laying web forming processes may be used. Accordingly, an aspect of the invention involves the use of recyclable dust material for such an air-laid product as mentioned above by performing the method described above.

The fibre mat product according to the invention is furthermore advantageous since the product is resilient with spring-back properties, i.e. that the mat raises again after compression and resumes its original shape.

This advantageous characteristic of the product according to the invention is also enhanced by the use of bi-component fibres so that the resulting fibrous mat is very flexible as the bi-component fibres acting as binding means in the product are short. The bi-co fibres become hard when cured after having been heated above the melt temperature, so by using short bi-co fibres the bi-co fibres do not adversely affect the resulting product with respect to flexibility and elastic properties when cured due to their short length.

Moreover, it is realised by the invention that the bi-component fibres mix better with the recycled dust material fibres because of the short and/or crimped nature of the fibres whereby only a small proportion of bi-co fibres are needed to provide sufficient coherence of the product. This further enhances the flexibility of the fibrous product.

In a preferable embodiment of the invention there is provided a third portion of shredded textile material, such as recycled fibres from textile materials of so-called shoddy obtained by shredding the recycled textile material into fibres.

At least 50 % of the portion of bi-component fibres is crimped fibres with a length between 2 to 50 mm. By using short and crimped fibres, e.g. of a helical shape extra flexibility and resilience is achieved in the product allowing the product to appear softer and having good properties with respect to raising again after compression and resuming its original shape. It is also realised that the bonding fibres may be bi-component fibres substituted or supplemented with polyester fibres, polypropylene and/or other plastic fibres having bonding characteristics.

At least the first portion of fibrous material may preferably be provided with an additive. Accordingly, at least the third portion of shredded textile fibres may be impregnated with a material for wetting the third portion of fibrous material. Moreover, at least the first portion of fibrous dust material may be impregnated with a material for wetting the dust material. By impregnating the fibres prior to the heating, the resulting effect is found surprisingly advantageous. The fibres become crispy during the heating which in turn means that the resulting fibre mat product becomes easy to cut into a predetermined shape afterwards.

In an embodiment, the fibres are provided with fire-retarding chemical, such as Borax, Boric acid, Ammonium sulphate or aluminium sulphate and/or citrus based compounds, mixed with, sprayed onto or impregnated into the fibres either before, during or after the forming process, e.g. in the forming box before being laid on the forming wire. In another embodiment, the dry-formed fibre mat may be sprayed with fire-retarding chemical, e.g. after the mat is formed and heated.

In an advantageous embodiment, the fibre portion of dust material and/or the third portion of shredded textile fibres, such as shoddy, are impregnated before being advanced into the forming box. The impregnating material is preferably a fire-retarding chemical in liquid or powder form. Hereby, the individual fibres are saturated utilising that the nature of the fibres is that they are absorbent. This provides an efficient fire-retarding characteristic of the finished product since the fire retarding chemicals are absorbed in the fibres. The fire-retarding chemical may be in liquid or powder form.

It is found that the dry-laid fibre product can be produced with a grammar weight between 8 kg/m³ and 200 kg/m³, in particular between 8 kg/m³ to 20 kg/m³.

If extra bonding of the fibres is required, an additional fluidized binder may be sprayed into the forming box and onto the fibres therein. The fluidized binder may alternatively be sprayed onto the fibres. As a further alternative or as a supplement, binder in pulverised form may be mixed with the fibres before the mixture is forwarded to the forming box.

The invention is further explained with reference to the accompanying drawings which show diagrams of three embodiment of the manufacturing process for producing a product according to the invention.

With reference to the drawings, three examples of the invention are shown and described in the following:
A first portion of dust material recovered dust from manufacturing or the like of fibrous textile material, preferably cotton textiles, is provided. This dust material is a waste product in most textile processing operations and contains typically very short cotton fibres.

These fibre portions are mixed with a small second portion of bi-component fibres. These bi-component fibres comprise a core and an outer sheathing, said outer sheathing having a first melting temperature which is lower than the second melting temperature of the core. The purpose these bi-component fibres serve is to provide bonding between the fibres in the first portion of fibres. The bi-component fibres become hard when cured after having been heated above the melt temperature, so by using short bi-co fibres the bi-co fibres do not adversely affect the resulting product with respect to flexibility and elastic properties when cured due to their short length. Moreover, the short bi-component fibres blend very well with the fibres of the first portion ensuring a more homogeneous bonding throughout the product.

A third portion of waste material in the form of a shoddy, i.e. shredded textile material, predominantly comprising cotton fibres may also be provided as a portion for the air-laid product to be manufactured. This so-called shoddy material originates from fabric, such as garment, shredded into yarns of about 10-125 mm fibres. The shredded textile fibres will naturally contain an amount of dust material. This amount may be increased by providing a pre-treatment of the shredded textile fibres, such as a further shredding prior to the fibre mixture.

The mixture of fibres are forwarded to a forming box, preferably of the kind described in WO2005/044529, where the box is provided with a revolving belt screen allowing for an even distribution of fibres irrespective of their size.

The fibres are introduced into the forming box and laid on the forming wire beneath the forming box. The web of fibres is forwarded in a continuous motion through a heating station where the bi-component fibres are activated and the fibrous web is provided with its coherence.

During the heating process, the fibre mat is subjected to a heat of approximately 130°C for a predetermined amount of time, such as 5 sec. to 5 min, whereby the bi-co fibres are activated.

The web is then cured as the heated bi-component fibres are cooled and the web may be forwarded through a pressing station for providing the resulting mat product with a predetermined density. Hereby, a cost effective fibre product having a grammar weight of 8-200 kg/m³ is provided, which has a good spring elastic effect and insulation properties.

The fibrous web may be sprayed with a fire-retarding substance, such as Borax, Boric acid, Ammonium sulphate or aluminium sulphate, for providing the product with fire-retarding properties. Alternative to spraying the formed web, this substance could also be sprayed into the forming box and thereby priming the fibres before the fibres are laid onto the forming wire.

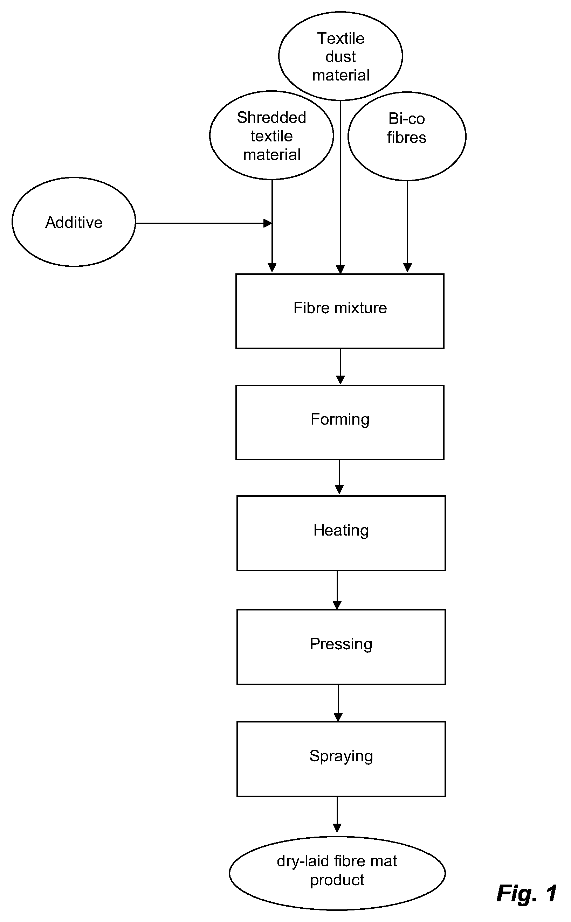

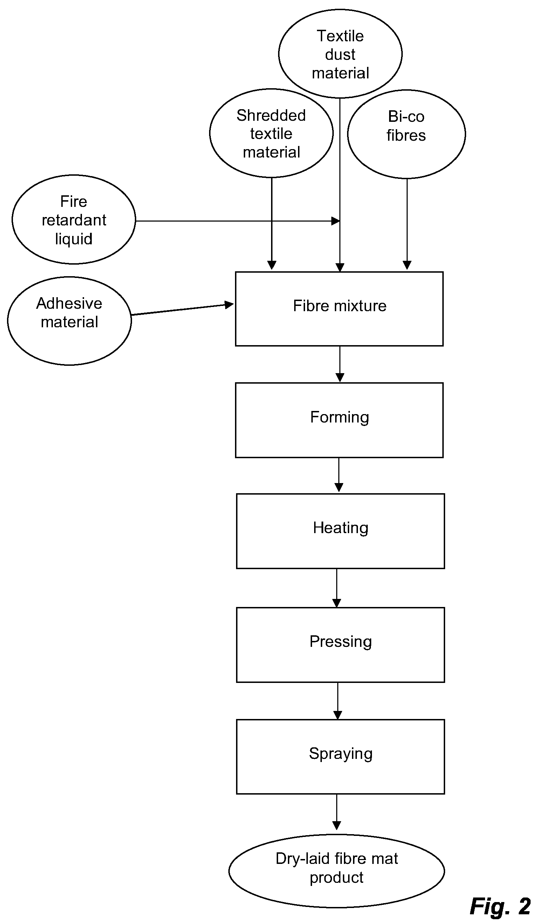

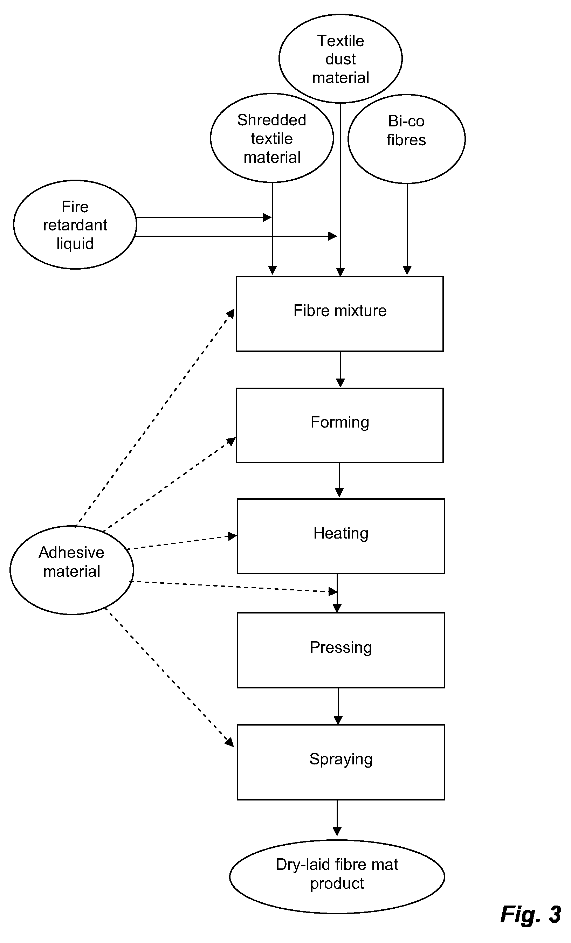

In order to achieve a superior fire-retarding characteristic of the air-laid product, it is realised by the first portion of dust material may be treated with the fire-retarding chemical or other types of additives prior to the fibre mixing, cf. fig. 2. Likewise, is it possible to treat the shredded textile fibres material before the fibre mixing, cf. fig. 1 or it is possible to treat both textile fibre portions with fire retarding chemicals before the mixing of the fibres, cf. fig. 3. The advantage being that the fire-retarding chemical is absorbed into the fibres. As indicated in fig. 3, an additive, such as a fire-retarding chemical or other functional additives may be applied to the product either immediately before or during any of the processing steps.

It is furthermore realised that a portion of fruit or grain shells, such as rice shells or the like, can be added to the fibre mixture. This results in an airy product with robust properties.

By the present invention, it is realised that the variations of the above-mentioned example may be performed without departing from the scope of the invention as defined in the accompanying claims. For instance a portion of cellulose fibres or other types of fibres may be provided depending on which properties of the fibre product is required.

## Claims

1. A non-woven fibre product comprising recycled material and manufactured by a dry forming process, said product comprising:
a first portion of up to 99 % dust material, where the dust material is recovered dust from manufacturing of fibrous textile material, preferably cotton textiles, and
a second portion at least 1 % bi-component fibres having a length between 2-75 mm, preferably 2-25 mm in length, and wherein at least 50 % of the portion of bi-component fibres are crimped fibres with a length between 2 to 50 mm.

2. A product according to claim 1, wherein there is provided a third portion of shredded textile material, such as recycled fibres from textile materials obtained by shredding the recycled textile material into fibres.

3. A product according to claim 1 or 2, wherein at least the first portion of fibrous material is provided with an additive, and at least the first portion of fibrous dust material is impregnated with a material for wetting the dust material.

4. A product according to claim 2, wherein at least the third portion of shredded textile material is impregnated with a material for wetting the third portion of fibrous material.

5. A product according to claim 4, wherein the impregnating material is a fire-retarding chemical in liquid or powder form.

6. A product according to claim 5, wherein the fire-retarding chemical is selected from a group comprising borax, boric acid, ammonium sulphate or aluminium sulphate and/or citrus based compounds.

7. A product according to any of the preceding claims, wherein the dry-formed fibre mat is provided with fire-retarding chemical in liquid or powder form.

8. A product according to any of the preceding claims, wherein the grammar weight of the air-laid product is between 8 kg/m³ and 200 kg/m³, in particular between 8 kg/m³ to 20 kg/m³.

9. A method of manufacturing a non-woven product according to any of claims 1 to 8 by dry forming a product of fibrous material, said method comprising the steps of:
providing a fibre mixture for providing a fibrous material, where said fibrous material comprises
a first portion of up to 99 % dust material, where the dust material is recovered dust from manufacturing of fibrous textile material, preferably cotton textiles, and
a second portion at least 1 % bi-component fibres having a length between 2-75 mm, preferably 2-25 mm in length and wherein at least 50 % of the portion of bi-component fibres are crimped fibres with a length between 2 to 50 mm.
and comprising a core and an outer sheathing,
said outer sheathing having a first melting temperature which is lower than the second melting temperature of the core;
advancing said fibrous material into a forming medium to form a web of dry-laid fibres, heating the web of fibres formed on the forming wire to a temperature above the first melting temperature; and
advancing the fibrous web through a pressing section whereby a fibrous product web with a predetermined density is formed.

10. A method according to claim 9, whereby a fluidized binder is sprayed into the forming box and onto the fibres therein.

11. A method according to claim 9 or 10, whereby there is supplied a third portion of shredded textile material, such as recycled fibres from textile materials obtained by shredding the recycled textile material into fibres and/or cellulose fibres.

12. A method according to any of claims 9 to 11, whereby at least the first portion of fibrous material is provided with an additive.

13. A method according to any of claims 9 to 12, whereby at least the third portion of shredded textile material is impregnated with a material for wetting the third material portion.

14. The use of fibrous dust material recovered from textile material processing equipment in a non-woven fibre product according to any of claims 1-8 and a method according to any of claims 9-13.

## Patentansprüche

1. Vliesfaserstoffprodukt, umfassend wiederverwertbares Material und hergestellt durch einen Trockenformprozess, wobei das Produkt Folgendes umfasst:
einen ersten Teil von bis zu 99 % Staubmaterial, wobei das Staubmaterial aus dem Staub der Herstellung von faserartigem Textilmaterial, bevorzugt von Baumwolltextilien, wiedergewonnen wird, und
einen zweiten Teil von wenigstens 1 % Bikomponenten-Faserstoffen mit einer Länge von zwischen 2 - 75 mm, bevorzugt in einer Länge von 2 - 25 mm, und wobei wenigstens 50 % des Teils der Bikomponenten-Faserstoffe aus gekräuselten Faserstoffen mit einer Länge von zwischen 2 bis 50 mm besteht.

2. Produkt nach Anspruch 1, wobei ein dritter Teil von zerkleinertem Textilmaterial, wie z.B. wiederverwertbare Faserstoffe von Textilmaterialien, die durch Zerkleinern des wiederverwertbaren Textilmaterials in Faserstoffe erhalten werden, bereitgestellt wird.

3. Produkt nach Anspruch 1 oder 2, wobei wenigstens der erste Teil des faserartigen Materials mit einem Zusatzstoff bereitgestellt wird und wenigstens der erste Teil des faserartigen Staubmaterials mit einem Material zum Benetzen des Staubmaterials imprägniert wird.

4. Produkt nach Anspruch 2, wobei wenigstens der dritte Teil des zerkleinerten Textilmaterials mit einem Material zum Benetzen des dritten Teils des faserartigen Materials imprägniert wird.

5. Produkt nach Anspruch 4, wobei es sich beim Imprägniermaterial um eine feuerhemmende Chemikalie in flüssiger oder Pulverform handelt.

6. Produkt nach Anspruch 5, wobei die feuerhemmende Chemikalie ausgewählt ist aus der Gruppe bestehend aus Borax, Borsäure, Ammoniumsulfat oder Aluminiumsulfat und/oder Verbindungen auf Zitrusbasis.

7. Produkt nach einem der vorstehenden Ansprüche, wobei die trockengeformte Faserstoffmatte mit einer feuerhemmenden Chemikalie in flüssiger oder Pulverform bereitgestellt wird.

8. Produkt nach einem der vorstehenden Ansprüche, wobei das Grammgewicht des aerodynamisch geformten Produkts zwischen 8 kg/m³ und 200 kg/m³, insbesondere zwischen 8 kg/m³ bis 20 kg/m³, beträgt.

9. Herstellungsverfahren eines Vliesfaserstoffprodukts nach einem der Ansprüche 1 bis 8 durch Trockenformen eines Produkts aus faserartigem Material, wobei das Verfahren die folgenden Schritte umfasst:
Bereitstellen einer Faserstoffmischung zur Bereitstellung eines faserartigen Materials, wobei das faserartige Material
einen ersten Teil von bis zu 99 % Staubmaterial, wobei das Staubmaterial wiedergewonnener Staub aus der Herstellung von faserartigem Textilmaterial, bevorzugt aus Baumwolltextilien, ist, und
einen zweiten Teil von wenigstens 1 % Bikomponenten-Faserstoffen mit einer Länge von zwischen 2 - 75 mm, bevorzugt in einer Länge von 2 - 25 mm umfasst und wobei wenigstens 50 % des Teils der Bikomponenten-Faserstoffe aus gekräuselten Faserstoffen mit einer Länge von 2 bis 50 mm besteht, sowie umfassend einen Kern und eine äußeren Umhüllung,
wobei die äußere Umhüllung eine erste Schmelztemperatur aufweist, die niedriger ist als die zweite Schmelztemperatur des Kerns;
das Befördern des faserartigen Materials in ein Formgebungsmedium, um eine Bahn aus trockengeformten Faserstoffen zu bilden,
das Erhitzen der Bahn aus Faserstoffen, die am Formgebungsdraht gebildet wurde, auf eine Temperatur über der ersten Schmelztemperatur; und
das Befördern der faserartigen Bahn durch einen Pressabschnitt, wodurch eine faserartige Produktbahn mit einer vorbestimmten Dichte gebildet wird.

10. Verfahren nach Anspruch 9, wobei ein Wirbelschichtbindemittel in die Formgebungsbox und auf die darin befindlichen Faserstoffe aufgesprüht wird.

11. Verfahren nach Anspruch 9 oder 10, wobei ein dritter Teil zerkleinerten Textilmaterials bereitgestellt wird, wie z.B. wiederverwertbare Faserstoffe aus Textilmaterialien, die durch das Zerkleinern des wiederverwertbaren Textilmaterials in Faserstoffe und/oder Cellulosefaserstoffe erhalten werden.

12. Verfahren nach einem der Ansprüche 9 bis 11, wobei wenigstens der erste Teil des faserartigen Materials mit einem Zusatzstoff bereitgestellt wird.

13. Verfahren nach einem der Ansprüche 9 bis 12, wobei wenigstens der dritte Teil des zerkleinerten Textilmaterials mit einem Material zum Benetzen des dritten Materialteils imprägniert wird.

14. Verwendung des faserartigen Staubmaterials, das aus der Textilmaterial-Verarbeitungsausrüstung wiedergewonnen wird, in einem Vliesfaserstoffprodukt nach einem der Ansprüche 1 - 8 sowie ein Verfahren nach einem der Ansprüche 9 - 13.

## Revendications

1. Produit de fibres non tissées comprenant une matière recyclée et fabriquée par un procédé de formage à sec, ledit produit comprenant :
une première partie allant jusqu'à 99 % de matière de poussière, où la matière de poussière est récupérée de la poussière provenant de la fabrication de matière textile fibreuse, de préférence des textiles en coton, et
une deuxième partie au moins 1 % de fibres à deux composants ayant une longueur entre 2 et 75 mm, de préférence de 2 à 25 mm de longueur, et dans lequel au moins 50 % de la proportion de fibres à deux composants sont des fibres crêpées ayant une longueur comprise entre 2 et 50 mm.

2. Produit selon la revendication 1, dans lequel est fournie une troisième partie de matière textile déchiquetée, telle que des fibres recyclées provenant de matières textiles obtenues par broyage en fibres de matière textile recyclée.

3. Produit selon la revendication 1 ou 2, dans lequel au moins la première partie de la matière fibreuse est pourvue d'un additif, et au moins la première partie de la matière de poussière fibreuse est imprégnée d'une matière pour mouiller la matière de poussière.

4. Produit selon la revendication 2, dans lequel au moins la troisième partie de la matière textile déchiquetée est imprégnée d'une matière pour mouiller la troisième partie de la matière fibreuse.

5. Produit selon la revendication 4, dans lequel la matière d'imprégnation est un produit chimique ignifuge sous forme de liquide ou de poudre.

6. Produit selon la revendication 5, dans lequel le produit chimique ignifugeant est choisi parmi un groupe comprenant le borax, l'acide borique, le sulfate d'ammonium ou le sulfate d'aluminium et/ou des composés à base d'agrumes.

7. Produit selon l'une quelconque des revendications précédentes, dans lequel le tapis de fibres formé à sec reçoit un produit chimique ignifuge sous forme de liquide ou de poudre.

8. Produit selon l'une quelconque des revendications précédentes, dans lequel le poids grammaire du produit obtenu par voie aérolique est compris entre 8 kg/m³ et 200 kg/m³, en particulier entre 8 kg/m³ et 20 kg/m³.

9. Procédé de fabrication d'un produit non-tissé selon l'une quelconque des revendications 1 à 8 par formage à sec d'un produit de matière fibreuse, ledit procédé comprenant les étapes consistant à :
fournir un mélange de fibres pour fournir une matière fibreuse, où ladite matière fibreuse comprend
une première partie allant jusqu'à 99 % de matière de poussière, dans lequel la matière de poussière est récupérée de la poussière provenant de la fabrication de matière textile fibreuse, de préférence des textiles de coton, et
une deuxième partie au moins 1 % de fibres à deux composants ayant une longueur comprise entre 2 et 75 mm, de préférence de 2 à 25 mm de longueur, et dans lequel au moins 50 % de la proportion de fibres à deux composants sont des fibres crêpées ayant une longueur comprise entre 2 et 50 mm, et comportant un noyau et un gainage extérieur, ladite gaine extérieure ayant une première température de fusion qui est inférieure à la seconde température de fusion du noyau ;
faire avancer ladite matière fibreuse dans un milieu de formage pour former une nappe de fibres obtenue par voie sèche, chauffer la nappe de fibres formée sur le fil de formage à une température supérieure à la première température de fusion; et
faire avancer la nappe fibreuse à travers une section de pressage dans lequel une nappe de produit fibreux ayant une densité prédéterminée est formée.

10. Procédé selon la revendication 9, dans lequel un liant fluidifié est pulvérisé dans la boîte de formage et sur les fibres qui s'y trouvent.

11. Procédé selon la revendication 9 ou 10, dans lequel est fournie une troisième partie de matière textile déchiquetée, telles que des fibres recyclées à partir de matières textiles obtenues par broyage de la matière textile recyclée en fibres et/ou des fibres de cellulose.

12. Procédé selon l'une quelconque des revendications 9 à 11, moyennant quoi au moins la première partie de matière fibreuse est pourvue d'un additif.

13. Procédé selon l'une quelconque des revendications 9 à 12, moyennant quoi au moins la troisième partie de matière textile déchiquetée est imprégnée d'une matière pour mouiller la troisième partie de matière.

14. Utilisation de matière de poussière fibreuse récupérée d'équipements de traitement de matière textile dans un produit de fibres non tissées selon l'une quelconque des revendications 1 à 8 et procédé selon l'une quelconque des revendications 9 à 13.
